# EUROPÄISCHE PATENTSCHRIFT

(11) **EP 2 631 512 B1**
(45) Veröffentlichungstag und Bekanntmachung des Hinweises auf die Patenterteilung: **29.10.2014**
(21) Anmeldenummer: 13153712.8
(22) Anmeldetag: 01.02.2013
(51) Int. Cl.: F16J 15/12

(54) **Dichtungsring**
Gasket
Anneau d'étanchéité

(30) Priorität: 24.02.2012 DE 202012100636 U
(43) Veröffentlichungstag der Anmeldung: 28.08.2013
(73) Patentinhaber: Kempchen Dichtungstechnik GmbH, 46147 Oberhausen (DE)
(72) Erfinder: Arndt, Rainer, 51381 Leverkusen (DE)
(74) Vertreter: Lorenz, Bernd Ingo Thaddeus

(56) Entgegenhaltungen:
- WO-A1-01/51834
- DE-A1- 10 032 831
- DE-U1- 29 609 769
- GB-A- 2 468 373
- US-A- 5 511 797

## Beschreibung

Die Erfindung betrifft einen Dichtungsring mit einem in radialer Richtung spiralförmig aus einem Metallstreifen und einem Füllmaterial gewickelten Grundkörper und mit Dichtauflagen an beiden Seiten des Grundkörpers, wobei die aus dem Füllmaterial und dem Metallstreifen gebildeten, in radialer Richtung aufeinander folgenden Lagen des Grundkörpers jeweils zumindest eine Abwinklung aufweisen. Derartige Dichtungsringe werden in der Praxis auch als gewickelte Dichtungen oder Spiraldichtungen bezeichnet.

Spiraldichtungen sind bewährte Dichtungselemente, die beispielsweise in Raffinerien, Chemieanlagen, Anlagen der Gasindustrie, Wasseraufbereitungsanlagen sowie im allgemeinen Rohrleitungsbau eingesetzt werden. Gemäß ihrem grundsätzlichen Aufbau weisen Spiraldichtungen einen Grundkörper auf, der als stützendes Element einen spiralförmig aufgewickelten Metallstreifen umfasst. Zwischen den Lagen des Metallstreifens ist zumindest in einem mittleren Bereich des Grundkörpers ein Füllmaterial vorgesehen, welches bei den bekannten Ausführungen aus Graphit oder PTFE (Polytetrafluorethylen) besteht. Dabei ist es üblich, dass an der Innenseite sowie an der Außenseite zumindest zwei aufeinander folgende Lagen des Metallstreifens vorgesehen sind, zwischen denen kein Füllmaterial vorhanden ist. Bei dem Herstellen des Dichtungsringes erfolgt ein Wickeln des Metallstreifens üblicherweise von innen nach außen. Erst nach dem Wickeln von zumindest zwei Lagen wird dann das Dichtungsmaterial eingebracht, wobei dieses auch bei den zumindest zwei letzten Lagen erneut weggelassen wird. Je nach Beschaffenheit des Dichtungsmaterials, kann dieses im Streifenform bereitgestellt werden, wobei dann der Streifen des Dichtungsmaterials kürzer ist als der Metallstreifen.

Während der Metallstreifen bei den bekannten Dichtungsringen im Wesentlichen eine stützende Funktion übernimmt, bewirkt das weiche Dichtungsmaterial in Form von Graphit oder PTFE eine gute Abdichtung.

PTFE zeichnet sich durch gute Dichtungseigenschaften aus, wobei jedoch bei Temperaturen oberhalb von etwa 250 °C eine Zersetzung von PTFE beobachtet wird. Bis zu einer Temperatur von etwa 450 °C werden in der Praxis Spiraldichtungen mit einem Füllmaterial aus Graphit eingesetzt, wobei oberhalb dieser Temperatur eine Oxidation des Graphits einsetzt. Auch wenn das Oxidationsverhalten verschiedener im Handel erhältlicher Graphit-Materialien unterschiedlich ist, können Dichtungsringe mit einem Füllmaterial aus Graphit nicht dauerhaft bei Temperaturen oberhalb von 550 °C eingesetzt werden. Entsprechend müssen bei solchen Temperaturen andere Dichtungstypen, beispielsweise Ganzmetalldichtungen, eingesetzt werden, wobei auch die Flansche gegebenenfalls anzupassen sind.

Eine Spiraldichtung mit dem bekannten Aufbau ist aus der DE 1 775 417 A bekannt.

Ein Dichtungsring mit den eingangs beschriebenen Merkmalen ist aus DE 296 09 769 U1 bekannt. Auf dem aus einem Metallstreifen und einem Dichtmaterial gebildeten Grundkörper ist an beiden Seiten, also an den abzudichtenden Flächen des Dichtungsringes, eine Weichstoffauflage aufgelegt. Das spiralförmig in den Metallstreifen eingewickelte Dichtungsmaterial weist einen Überstand auf und bildet mit den Weichdichtungsauflagen einen praktisch geschlossenen Körper, bei dem der Metallstreifen eine innenliegende Verstärkung bildet. Durch den Überstand des eingewickelten Dichtungsmaterials wird erreicht, dass sich zusammen mit den Weichdichtungsauflagen unter Druckbelastung eine kontinuierliche Dichtstruktur ergibt.

Auch aus der DE 100 32 831 A1 ist ein gattungsgemäßer Dichtungsring bekannt, der üblicherweise Graphit als eingewickeltes Dichtungsmaterial sowie als Dichtauflage aufweist. Um ein solches weiches Dichtungsmaterial vor einem Auspressen zu schützen, ist die Dichtauflage seitlich gekammert. Auch bei der bevorzugten Ausgestaltung der Dichtauflagen sowie des eingewickelten Materials aus Graphit ergibt sich unter Belastung ein kontinuierlich durchgehendes Dichtungsmaterial, in dem ein mittlerer Abschnitt des gewickelten Metallstreifens gekammert angeordnet ist. Lediglich pauschal werden andere mögliche Dichtungsmaterialien genannt, wobei der Fachmann das gleiche Dichtungsmaterial als Füllmaterial und Dichtauflage vorsehen wird, um die beschriebene, durchgehende Dichtungsstruktur zu erreichen.

Der vorliegenden Erfindung liegt die Aufgabe zugrunde, einen Dichtungsring anzugeben, der gute Dichteigenschaften aufweist und für den Einsatz bei hohen Temperaturen, insbesondere einer Temperatur oberhalb von 500 °C, einsetzbar ist.

Ausgehend von einem Dichtungsring mit den eingangs beschriebenen Merkmalen wird die Aufgabe durch die Merkmale des Anspruchs 1, gelöst. Erfindungsgemäß werden als Füllmaterial einerseits und als Dichtauflagen andererseits unterschiedliche Materialien bereitgestellt. Des Weiteren steht das als Füllmaterial vorgesehene Schichtsilikat in Richtung der Dichtauflagen nicht über die Metallstreifen vor. Im Gegensatz zu den bekannten Ausführungen bilden also die Dichtauflagen und das Füllmaterial keine durchgehende, einheitliche Dichtstruktur aus. Vielmehr erfolgt im montierten Zustand nicht nur zwischen den Dichtauflagen und den abzudichtenden Bauteilen, insbesondere Flanschen, sondern auch innerhalb des Dichtungsringes zwischen den Dichtauflagen und dem spiralförmig gewickelten Metallstreifen eine Abdichtung im Metall-Metall-Kontakt. Erfindungsgemäß wird also die Dichtwirkung durch den Kontakt zwischen dem Metallstreifen und den Dichtauflagen aus einer duktilen Metallschicht erreicht. Das Schichtsilikat kann zwar zur Abdichtung beitragen, jedoch dient es wesentlich auch dazu, die elastischen Eigenschaften und insbesondere das Rückstellvermögen des Grundkörpers in einem gewünschten Maße einzustellen.

Gemäß der vorliegenden Erfindung ist vorgesehen dass die duktilen Metallschichten jeweils eine Dicke zwischen 0,1 mm und 0,3mm aufweisen. Dadurch wird erreicht, dass diese Metallschichten im ausreichenden Maße verformt werden können, wobei Metallschichten in einer solchen Dicke auch in Form von dünnen Blechen bzw. Folien auf einfache Weise bereitgestellt werden können.

Gemäß der Erfindung ist vorgesehen, dass die Dichtauflagen in radialer Richtung den gesamten Grundkörper, also den gesamten Metallstreifen und das Füllmaterial abdecken. Auf diese Weise kann erreicht werden, dass über den gesamten Grundkörper definierte Dichtungseigenschaften vorliegen, wobei eine seitliche Kammerung der im Vergleich zu üblichen Dichtmaterialien harten duktilen Metallschichten nicht notwendig ist.

Besonders bevorzugt bestehen die duktilen Metallschichten aus Silber, wobei aber auch grundsätzlich andere duktile Metalle wie Kupfer, Aluminium und Gold in Betracht kommen. Die Dicke liegt vorzugsweise zwischen 0,1 mm und 0,3 mm, besonders bevorzugt bei etwa 0,2 mm.

Als Schichtsilikat kann insbesondere Glimmer vorgesehen sein, wobei das Schichtsilikat auch als Silikatstreifen bereitgestellt werden kann. Bei der Herstellung des Grundkörpers werden dann die beiden Streifen übereinandergelegt und aufgewickelt, wobei, wie zuvor beschriebene, die Breite des Metallstreifens größer oder mindestens gleich der Breite des Schichtsilikates ist, damit das Schichtsilikat an dem Grundkörper in Richtung der Dichtauflagen, als in Richtung der Breite des Metallstreifens, nicht über den Metallstreifen vorsteht.

Durch die erfindungsgemäße Kombination von Materialien kann nicht nur eine sehr gute Abdichtung erreicht werden. Vielmehr kann auch ein Dichtungsring bereitgestellt werden, der frei von Kohlenstoff und organischen Kohlenstoffverbindungen, also insbesondere Kunststoff, ist. Es ergibt sich damit eine deutlich höhere Temperaturbeständigkeit.

Der erfindungsgemäße Dichtungsring ist vorzugsweise für eine dauerhafte Verwendung bei einer Temperatur oberhalb von 500 °C, insbesondere oberhalb 550 °C, eingerichtet. So erlauben Schichtsilikate wie Glimmer einen Einsatz bis zu Temperaturen von 900 °C. Je nach Materialauswahl sind auch noch höhere Temperaturen möglich.

Um das Schichtsilikat als Füllmaterial zu schützen, kann der Grundkörper in an sich bekannter Weise an seiner Innenseite und seiner Außenseite jeweils zumindest zwei aufeinander folgende Lagen aufweisen, die aus dem Metallstreifen gebildet sind. Entsprechend wird am Anfang und am Ende bei dem Aufwickeln des Metallstreifens das Schichtsilikat weggelassen.

Der Metallstreifen und damit auch das in den spiralförmig aufgewickelten Metallstreifen eingelagerte Füllmaterial weisen im Querschnitt eine Profilierung auf. So weisen die in radialer Richtung aufeinander folgenden Lagen des Grundkörpers jeweils zumindest eine Abwinklung auf. Diese ist dazu vorgesehen, um bei einer Belastung an den Dichtflächen eine elastische Federung zu ermöglichen. So ist es denkbar, dass die Lagen im Querschnitt V- oder bogenförmig sind. Besonders bevorzugt ist eine Ausgestaltung, bei der die Lagen einen V-förmigen Mittelabschnitt aufweisen, an den gerade Ränder anschließen. Die Ränder erstrecken sich damit also senkrecht zu der Dichtfläche, wodurch dort ein Abknicken des Metallstreifens unter Druckbelastung vermieden wird. Im Rahmen einer solchen Ausgestaltung wird die elastische Verformbarkeit im Wesentlichen durch den V-förmigen Mittelabschnitt erreicht.

In an sich bekannter Weise kann an der Innenseite und/oder der Außenseite des Grundkörpers ein Stützring angeordnet sein, der gegenüber dem Grundkörper mit den darauf angeordneten Dichtauflagen eine geringere Höhe aufweist. Der Stützring ist nicht dazu vorgesehen an der Abstützung der über den Dichtungsring miteinander zu verbindenden Elemente teilzunehmen. Vielmehr kann der Stützring zur Zentrierung des Dichtungsringes und/oder zur Stabilisierung des Grundkörpers vorgesehen sein.

Gegenstand der Erfindung ist auch eine Flanschverbindung mit dem beschriebenen Dichtungsring. Die Flanschverbindung zeichnet sich dadurch aus, dass die spezifische Leckagerate gemäß DIN EN 13555 bei einer Druckdifferenz von 40 bar und einer Flächenpressung von 60 N/mm² (Newton pro Quadratmillimeter) weniger als 0,1 mg/sm (Milligramm pro (Sekunde x Meter)), vorzugsweise weniger als 0,01 mg/sm beträgt.

Wie bereits zuvor erläutert, beruht der erfindungsgemäße Dichtungsring auf einem völlig anderen Abdichtungskonzept als die bekannten Spiraldichtungen, auch wenn diese mit einer Dichtauflage versehen sind. Gemäß dem Stand der Technik soll nämlich aus dem eingewickelten Dichtmaterial und der Dichtauflage eine einheitliche Dichtstruktur gebildet werden. Im Gegensatz dazu trägt erfindungsgemäß auch innerhalb des Grundkörpers ein Metall-Metall-Kontakt zwischen den Dichtauflagen aus duktilen Metallschichten und dem Metallstreifen wesentlich zur Abdichtung bei. So kann auch bei einer Erhöhung der Flächenpressung eine sehr signifikante Reduzierung der spezifischen Leckagerate erreicht werden. So ist gemäß einer bevorzugten Ausgestaltung der erfindungsgemäßen Flanschverbindung vorgesehen, dass die spezifische Leckagerate gemäß DIN EN 13555 bei einer Druckdifferenz von 40 bar und einer Flächenpressung von 80 N/mm² weniger als 0,001 mg/sm, vorzugsweise weniger als 0,0001 mg/sm beträgt.

Die Erfindung wird im Folgenden anhand einer lediglich ein Ausführungsbeispiel darstellenden Zeichnung dargestellt.

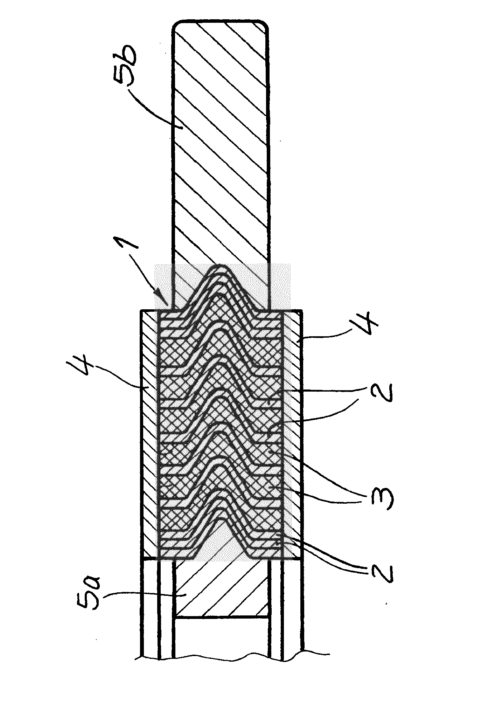

Die einzige Figur zeigt einen erfindungsgemäßen Dichtungsring.

Der erfindungsgemäße Dichtungsring weist einen Grundkörper 1 auf, der aus einem profilierten Metallstreifen 2 und einem Füllmaterial 3 aus Schichtsilikat gebildet ist. Darüber hinaus ist der Grundkörper 1 an beiden Seiten mit einer Dichtauflage 4 versehen, die jeweils aus einer Metallschicht einer Dicke von weniger als 0,4 mm gebildet ist. Bevorzugt sind dabei duktile Metallschichten aus Silber.

Um das Füllmaterial 3 sicher anzuordnen, weist der Grundkörper 1 an seiner Innenseite und seiner Außenseite jeweils zwei aufeinander folgende Lagen des Metallstreifens 2 auf, zwischen denen kein Füllmaterial 3 angeordnet ist. Erfindungsgemäß steht das Füllmaterial 3 in Richtung der Dichtauflagen 4 nicht über den Metallstreifen 2 vor. Das Füllmaterial 3 kann also entweder bündig mit dem Metallstreifen 2 sein oder gegenüber dem Metallstreifen 2 zurückspringen.

Bei der Anordnung des Dichtungsringes zwischen zwei Flanschen erfolgt eine Abdichtung des Dichtungsringes gegenüber den beiden Flanschen an den Dichtauflagen 4 in einem Metall-Metall-Kontakt. Erfindungsgemäß unterscheidet sich das Material der Dichtauflagen 4 von dem Füllmaterial 3, wobei entgegen üblicher Ausgestaltungen das Füllmaterial 3 auch nicht gegenüber dem Metallstreifen 2 vorsteht. Bei einer Kraftbeaufschlagung des Dichtungsringes wird so auch ein direkter Metall-Metall-Kontakt zwischen den Dichtauflagen 4 und dem spiralförmig aufgewickelten Metallstreifen 2 erzielt.

Die einzige Figur zeigt einen Dichtungsring der frei von Kohlenstoff sowie frei von organischen Kohlenstoffverbindungen ist.

Des Weiteren ist dargestellt, dass optional Stützringe 5a, 5b vorgesehen sein können, die an der Innenseite bzw. an der Außenseite des Grundkörpers 1 angeordnet sind.

## Patentansprüche

1. Dichtungsring mit einem in radialer Richtung spiralförmig aus einem Metallstreifen (2) und einem Füllmaterial (3) gewickelten Grundkörper (1) und mit Dichtauflagen (4) an beiden Seiten des Grundkörpers (1), wobei die aus dem Füllmaterial (3) und dem Metallstreifen gebildeten, in radialer Richtung aufeinander folgenden Lagen des Grundkörpers (1) jeweils zumindest eine Abwinklung aufweisen, wobei Metallschichten als Dichtauflagen (4) und ein Schichtsilikat als Füllmaterial (3) vorgesehen sind, und wobei das Füllmaterial in Richtung der Dichtauflagen (4) nicht über den Metallstreifen (2) vorsteht, **dadurch gekennzeichnet, dass** die Dichtauflagen (4) aus einem duktilen Metall mit einer Dicke von jeweils zwischen 0,1 mm und 0,3 mm in radialer Richtung den gesamten Grundkörper (1) abdecken.

2. Dichtungsring nach Anspruch 1, **dadurch gekennzeichnet, dass** als duktile Metallschichten Silberschichten vorgesehen sind.

3. Dichtungsring nach einem der Ansprüche 1 oder 2, **dadurch gekennzeichnet, dass** das Schichtsilikat aus Glimmer besteht.

4. Dichtungsring nach einem der Ansprüche 1 bis 3, **dadurch gekennzeichnet, dass** dieser frei von Kohlenstoff und organischen Kohlenstoffverbindungen ist.

5. Dichtungsring nach einem der Ansprüche 1 bis 4, **dadurch gekennzeichnet, dass** dieser für eine dauerhafte Verwendung bei einer Temperatur oberhalb von 500 °C eingerichtet ist.

6. Dichtungsring nach einem der Ansprüche 1 bis 5, **dadurch gekennzeichnet, dass** der Grundkörper (1) an seiner Innenseite und seiner Außenseite jeweils zwei unmittelbar aufeinander folgende Lagen aufweist, die aus dem Metallstreifen (2) gebildet sind.

7. Dichtungsring nach einem der Ansprüche 1 bis 6, **dadurch gekennzeichnet, dass** das Schichtsilikat als Schichtsilikatstreifen bereitgestellt wird.

8. Dichtungsring nach einem der Ansprüche 1 bis 7, **dadurch gekennzeichnet, dass** an der Innenseite und/oder der Außenseite des Grundkörpers (1) ein Stützring (5a, 5b) angeordnet ist.

9. Flanschverbindung mit einem Dichtungsring nach einem der Ansprüche 1 bis 8, **dadurch gekennzeichnet, dass** die spezifische Leckagerate gemäß DIN EN 13555 bei einer Druckdifferenz von 40 bar und einer Flächenpressung von 60 N/mm² weniger als 0,1 mg/sm, vorzugsweise weniger als 0,01 mg/sm, beträgt.

10. Flanschverbindung nach Anspruch 9, **dadurch gekennzeichnet, dass** die spezifische Leckagerate gemäß DIN EN 13555 bei einer Druckdifferenz von 40 bar und einer Flächenpressung von 80 N/mm² weniger als 0,001 mg/sm, vorzugsweise weniger als 0,0001 mg/sm, beträgt.

## Claims

1. Sealing ring with a radially spiral base body (1) wound from a metal strip (2) and a filling material (3) and with sealing pads (4) on both sides of the base body (1), such that the successive layers formed of the base body (1) consisting of the filling material (3) and the metal strip in the radial direction in each case have at least one angled portion, wherein metal layers are provided as sealing pads (4) and a phyllosilicate as the filling material (3), and wherein the filling material does not project in the direction of the seal supports (4) beyond the metal strip (2), **characterised in that** the sealing pads (4) of a ductile metal with a thickness of between 0.1 mm and 0.3 mm cover the entire base body (1) in the radial direction.

2. Sealing ring according to claim 1, **characterised in that** silver layers are provided as layers of ductile metal.

3. Sealing ring according to one of claims 1 or 2, **characterised in that** the phyllosilicate is made of mica.

4. Sealing ring according to one of claims 1 to 3, **characterised in that** it is free from carbon and organic carbon compounds.

5. Sealing ring according to one of claims 1 to 4, **characterised in that** it is configured for continuous use at a temperature above 500 °C.

6. Sealing ring according to one of claims 1 to 5, **characterised in that** the base body (1) has on its inner side and its outer side in each case two immediately successive layers which are formed from the metal strip (2).

7. Sealing ring according to one of claims 1 to 6, **characterised in that** the phyllosilicate is provided as a phyllosilicate strip.

8. Sealing ring according to one of claims 1 to 7, **characterised in that** a support ring (5a, 5b) is provided on the inside and/or outside of the base body (1).

9. Flange connection with a sealing ring according to one of claims 1 to 8, **characterised in that** the specific rate of leakage according to DIN EN 13555 at a pressure differential of 40 bar and a surface pressure of 60 N/mm² is less than 0.1 mg/sm, preferably less than 0.01 mg/sm.

10. Flange connection according to claim 9, **characterised in that** the specific leakage rate according to DIN EN 13555 at a pressure differential of 40 bar and a surface pressure of 80 N/mm² is less than 0.001 mg/sm, preferably less than 0.0001 mg/sm.

## Revendications

1. Bague d'étanchéité avec un corps de base (1) enroulé en spirale en direction radiale à partir d'une bande métallique (2) et d'un matériau de remplissage (3) et avec des revêtements d'étanchéité (4) sur les deux côtés du corps de base (1), avec les couches du corps de base (1) qui se succèdent en direction radiale et sont formées à partir du matériau de remplissage (3) et de la bande métallique présentant chacune au moins un coude, des couches en métal étant prévues comme revêtements d'étanchéité (4) et un phyllosilicate étant prévu comme matériau de remplissage (3), et avec le matériau de remplissage en direction des revêtements d'étanchéité (4) ne faisant pas saillie de la bande métallique (2), **caractérisée par le fait que** les revêtements d'étanchéité (4) en métal ductile avec une épaisseur allant de 0,1 mm à 0,3 mm chacun couvrent tout le corps de base (1) en direction radiale.

2. Bague d'étanchéité conformément à la revendication 1, **caractérisée par le fait que** des couches d'argent sont prévues comme couches de métal ductile.

3. Bague d'étanchéité conformément à l'une des revendications 1 ou 2, **caractérisée par le fait que** le phyllosilicate est composé de mica.

4. Bague d'étanchéité conformément à l'une des revendications 1 à 3, **caractérisée par le fait que** celle-ci est exempte de carbone et de composés de carbone organique.

5. Bague d'étanchéité conformément à l'une des revendications 1 à 4, **caractérisée par le fait que** celle-ci est conçue pour une utilisation permanente à une température supérieure à 500 °C.

6. Bague d'étanchéité conformément à l'une des revendications 1 à 5, **caractérisée par le fait que** le corps de base (1) présente à l'intérieur et à l'extérieur deux couches qui se succèdent directement et sont formées à partir de la bande métallique (2).

7. Bague d'étanchéité conformément à l'une des revendications 1 à 6, **caractérisée par le fait que** le phyllosilicate est mis à disposition comme bande de phyllosilicate.

8. Bague d'étanchéité conformément à l'une des revendications 1 à 7, **caractérisée par le fait qu'**une bague d'appui (5a, 5b) est positionnée à l'intérieur et/ou à l'extérieur du corps de base (1).

9. Raccord à bride avec une bague d'étanchéité conformément à l'une des revendications 1 à 8, **caractérisé par le fait que** le débit de fuite spécifique conformément à la norme DIN EN 13555 est inférieur à 0,1 mg/sm, ou à 0,01 mg/sm de préférence, avec une différence de pression de 40 bar et une pression de surface de 60 N/mm².

10. Raccord à bride conformément à la revendication 9, **caractérisé par le fait que** le débit de fuite spécifique conformément à la norme DIN EN 13555 est inférieur à 0,001 mg/sm, ou à 0,0001 mg/sm de préférence, avec une différence de pression de 40 bar et une pression de surface de 80 N/mm².
